# EUROPEAN PATENT APPLICATION

(11) **EP 3 151 485 A1**
(43) Date of publication of application: **05.04.2017**
(21) Application number: 16190776.1
(22) Date of filing: 27.09.2016
(51) Int. Cl.: H04L 12/721, H04L 12/46, H04L 12/707, H04L 12/703, H04L 12/723

(54) **EGRESS NODE PROTECTION IN EVPN ALL-ACTIVE TOPOLOGY**

(30) Priority: 29.09.2015 US 201514869806
(71) Applicant: Juniper Networks, Inc., Sunnyvale, CA 94089 (US)
(72) Inventor: ARORA, Kapil, 560066 Bangalore (IN); SINGH, Nitin, Fremont, CA 94539 (US); MALALI, Sunil Kumar, 560066 Bangalore (IN)
(74) Representative: D Young & Co LLP

(57) **Abstract**

In general, techniques enable an intermediate router to perform node protection for one or more other PE routers operably coupled to the intermediate router in active-active mode in an EVPN. The techniques may include configuring the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes without performing layer two (L2) address learning for the EVPN. The techniques may include installing a primary route to a protected router and a backup route from the intermediate router to a PE router other than the protected router, and in response to a link failure, forwarding network traffic using the backup route without requiring reprogramming the forwarding unit.

## Description

This application claims priority from U.S. Application No. 14/869,806, filed September 29, 2015, the entire content of which is incorporated herein by reference.

### TECHNICAL FIELD

The present teachings relate to computer networks and, more specifically, to forwarding network traffic within computer networks.

### BACKGROUND

A computer network is a collection of interconnected computing devices that can exchange data and share resources. Example network devices include layer two devices that operate within the second layer (L2) of the Open Systems Interconnection (OSI) reference model, i.e., the data link layer, and layer three devices that operate within the third layer (L3) of the OSI reference model, i.e., the network layer. Network devices within computer networks often include a control unit that provides control plane functionality for the network device and forwarding components for routing or switching data units.

An Ethernet Virtual Private Network (EVPN) may be used to extend two or more remote layer two (L2) customer networks through an intermediate layer three (L3) network (usually referred to as a provider network), in a transparent manner, i.e., as if the intermediate L3 network does not exist. In particular, the EVPN transports L2 communications, such as Ethernet packets or "frames," between customer networks via the intermediate network. In a typical configuration, provider edge (PE) network devices (e.g., routers and/or switches) coupled to the customer edge (CE) network devices of the customer networks define label switched paths (LSPs) (also referred to as pseudowires) within the provider network to carry encapsulated L2 communications as if these customer networks were directly attached to the same local area network (LAN). In some configurations, the PE network devices may also be connected by an IP infrastructure in which case IP/GRE tunneling or other IP tunneling can be used between the network devices.

In an EVPN, MAC learning between PE network devices occurs in the control plane rather than in the data plane (as happens with traditional bridging) using a routing protocol. For example, in EVPNs, a PE network device typically uses the Border Gateway Protocol (BGP) (i.e., an L3 routing protocol) to advertise to other provider edge network devices the MAC addresses learned from the local consumer edge network devices to which the PE network device is connected. A PE device may use BGP route advertisement message to announce reachability information for the EVPN, where the BGP route advertisement specifies one or more MAC addresses learned by the PE network device instead of L3 routing information.

In an EVPN configuration referred to as all-active mode, an Ethernet segment includes multiple PE network devices that provide multi-homed connectivity for one or more local customer network devices. Moreover, the multiple PE network device provide transport services through the intermediate network to a remote PE network device, and each of the multiple PE network devices in the Ethernet segment operates forwards Ethernet frames in the segment for the customer network device. When a network failure occurs at one of the multiple PE network devices that provide multi-homed connectivity, an upstream PE network device in the EVPN may detect the failure via BGP and withdraw the failed network PE device. However, the withdrawal period may take multiple seconds, during which network traffic is still forwarded to the failed network PE device and dropped.

### SUMMARY

The techniques described herein enable a provider (or "intermediate") router to perform node protection for one or more other PE routers, where the provider router is positioned within an a service provider network between a remote provide edge router and at least two provider edge PE routers operating in active-active mode in an Ethernet Virtual Private Network (EVPN). The provider router may operate in a passive mode in which the provider router executes the EVPN protocol to listen for Ethernet Auto-Discovery (AD) routes advertised by the PE routers, but does not perform MAC learning or exchange MAC routes with other PE routers. By listening for Ethernet AD routes, the provider router may determine that the PE routers coupled to the provider router are included in the same Ethernet Segment.

Because the provider router is able to determine that the PE routers are in the same Ethernet Segment, the provider router can provide node protection in the event of a link failure for one or more of the PE routers by re-directing network traffic for the Ethernet Segment to another PE router operating in active-active mode in the same Ethernet Segment. For each PE router that receives node protection from the provider router, the provider router may generate a context table that includes a backup route, which the provider route may use to re-direct traffic away from the protected PE router. If a link failure occurs, the provider router may perform local repair to re-direct network traffic to another PE router in the same Ethernet Segment thereby preventing fewer dropped packets than global repair performed by other PE routers to remove the protected PE router from the Ethernet Segment.

In some examples, a method includes configuring an intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN; installing, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and in response to determining within the forwarding unit of the intermediate router that network traffic cannot reach the protected PE router, forwarding network traffic using the backup route without requiring reprogramming the forwarding unit.

In some examples, an intermediate router includes a routing engine that configures the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN; wherein the routing engine installs, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and wherein the forwarding unit, in response to determining within the forwarding unit of the intermediate router that network traffic cannot reach the protected PE router, uses the backup route without requiring reprogramming the forwarding unit.

In some examples, a computer-readable medium includes instructions for causing at least one programmable processor of an intermediate router to: configure the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN; install, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and in response to determining within the forwarding unit of the intermediate router that network traffic cannot reach the protected PE router, forward network traffic using the backup route without requiring reprogramming the forwarding unit.

The details of one or more embodiments of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example system, in accordance with techniques of the disclosure.
FIG. 2 is a block diagram illustrating further details of the example system of FIG. 1, in accordance with one or more techniques of the disclosure.
FIG. 3 is a block diagram illustrating an example provider router capable of performing the disclosed techniques.
FIG. 4 is a flowchart illustrating example operations of multiple network devices in accordance with techniques of the disclosure.

### DETAILED DESCRIPTION

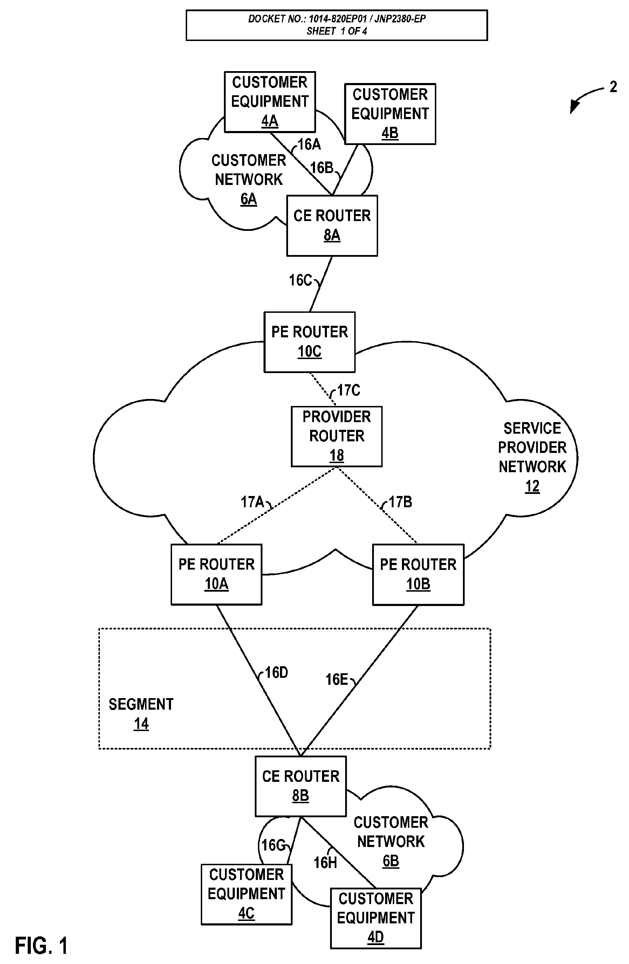

FIG. 1 is a block diagram illustrating an example system, in accordance with techniques of the disclosure. In the example of FIG. 1, PE routers 10A-10C ("PE routers 10") provide customer devices 4A-4D ("customer devices 4") associated with customer networks 6A-6B ("customer networks 6") with access to service provider network 12 via CE routers 8A-8B ("CE routers 8"). Communication links 16A-16H may be Ethernet, ATM or any other suitable network connections.

PE routers 10 and CE routers 8 are illustrated as routers in the example of FIG. 1. However, techniques of the disclosure may be implemented using switches or other suitable network devices that participate in a layer two (L2) virtual private network service, such as an Ethernet Virtual Private Network (EVPN). Customer networks 6 may be networks for geographically separated sites of an enterprise. Each of customer networks 6 may include additional customer equipment 4A-4D ("customer equipment 4"), such as, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. The configuration of network 2 illustrated in FIG. 1 is merely by way of example. For example, an enterprise may include any number of customer networks 6. Nonetheless, for ease of description, only customer networks 6A-6B are illustrated in FIG. 1.

Service provider network 12 represents a publicly accessible computer network that is owned and operated by a service provider, which is usually large telecommunications entity or corporation. Service provider network 12 is usually a large layer three (L3) computer network, where reference to a layer followed by a number refers to a corresponding layer in the Open Systems Interconnection (OSI) model. Service provider network 12 is a L3 network in the sense that it natively supports L3 operations as described in the OSI model. Common L3 operations include those performed in accordance with L3 protocols, such as the Internet protocol (IP). L3 is also known as a "network layer" in the OSI model and the term L3 may be used interchangeably with the phrase "network layer" throughout this disclosure.

Although not illustrated, service provider network 12 may be coupled to one or more networks administered by other providers, and may thus form part of a large-scale public network infrastructure, e.g., the Internet. Consequently, customer networks 6 may be viewed as edge networks of the Internet. Service provider network 12 may provide computing devices within customer networks 6 with access to the Internet, and may allow the computing devices within the customer networks to communicate with each other.

Service provider network 12 may include a variety of network devices other than PE routers 10. For instance, service provider network 12 may include a provider router 18 (or "intermediate router 18"). In some examples, provider router 18 may reside within service provider network 12 and along a path in service provider network 12 between two or more PE routers. Provider router 18 may be a router that is not at the edge of service provider network 12. For instance, provider router 18 may not be directly coupled to a network device of a customer network such as a CE router, but rather may be communicatively coupled to a network device of a customer network indirectly by one or more hops or other routers, such as a PE router. For instance, provider router 18 may be not be directly coupled to CE router CE router 8A by a physical communication link, but rather indirectly via PE router 10C. In some examples, provider router 18 may execute one or more protocols such as BGP and EVPN, but may not perform MAC learning. As further described in this disclosure, provider router 18 may operate in a "passive mode" in which provider router 18 listens for Ethernet Auto-Discovery Routes, although it does not perform MAC learning or reside at the edge of service provider network 12.

Although additional network devices are not shown for ease of explanation, it should be understood that system 2 may comprise additional network and/or computing devices such as, for example, one or more additional switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Moreover, although the elements of system 2 are illustrated as being directly coupled, it should be understood that one or more additional network elements may be included along any of network links 16, such that the network elements of system 2 are not directly coupled.

Service provider network 12 typically provides a number of residential and business services, including residential and business class data services (which are often referred to as "Internet services" in that these data services permit access to the collection of publically accessible networks referred to as the Internet), residential and business class telephone and/or voice services, and residential and business class television services. One such business class data service offered by service provider network 12 includes L2 EVPN service. For example, an EVPN is a service that provides a form of L2 connectivity across an intermediate L3 network, such as service provider network 12, to interconnect two L2 customer networks, such as L2 customer networks 6, that are usually located in two different geographic areas. Often, EVPN is transparent to the customer networks in that these customer networks are not aware of the intervening intermediate service provider network and instead act and operate as if these two customer networks were directly connected and formed a single L2 network. In a way, EVPN enables a form of a transparent LAN connection between two geographically distant customer sites that each operates a L2 network and, for this reason, EVPN may also be referred to as a "transparent LAN service."

To configure an EVPN, a network operator of the service provider configures various devices included within service provider network 12 that interface with L2 customer networks 6. The EVPN configuration may include an EVPN instance (EVI), which consists of one or more broadcast domains. Generally, an EVI may refer to a routing and forwarding instance on a PE router, such as PE routers 10A-10C. Consequently, multiple EVIs may be configured on PE routers 10 for Ethernet segment 14, as further described herein, each providing a separate, logical layer two (L2) forwarding domain. In this way, multiple EVIs may be configured that each includes one or more of PE routers 10A-10C of Ethernet segment 14. In some examples, Ethernet Tags are then used to identify a particular broadcast domain, e.g., a VLAN, in an EVI. A PE router may advertise a unique EVPN label per <ESI, Ethernet Tag> combination. This label assignment methodology is referred to as a per <ESI, Ethernet Tag> label assignment. Alternatively, a PE router may advertise a unique EVPN label per MAC address. In still another example, a PE router may advertise the same single EVPN label for all MAC addresses in a given EVI. This label assignment methodology is referred to as a per EVI label assignment.

In the example of FIG. 1, for use in transporting communications associated with one or more EVIs, the network operator configures PE routers 10 to provision pseudowires 17A-17C for transporting L2 communications. Pseudowires are logical network connections formed from two unidirectional label switched paths (LSPs) that emulate a connection not natively offered by service provider network 12 for consumption outside the boundaries of that service provider network 12. Pseudowires may emulate a L2 connection within service provider network 12 enabling service provider network 12 to offer emulated L2 connectivity externally for consumption by L2 customer networks 6. As such, each EVPN instance may operate over pseudowires 17 to enable a logical form of L2 connectivity between customer networks 6.

To configure an EVI, pseudowires 17 may be configured such that each of PE routers 10 that provide a given EVI is interconnected by way of pseudowires to every other one of the PE devices participating in the EVI. In the example of FIG. 1, each of PE routers 10 provides access to the EVPN for carrying traffic associated with customer networks 6 and, therefore, each of PE devices 10 within the same Ethernet segment may be connected to every other PE device 10 via pseudowires 17. Once pseudowires are configured in this manner, EVPN may be enabled within PE devices 10 to operate over the pseudowires, which may in this context operate as logical dedicated links through service provider network 12. In operation, EVPN generally involves prepending or otherwise inserting a tag and a pseudowire label onto incoming L2 packets, which may also be referred to as L2 frames (particularly in the context of Ethernet), and transmitting the tagged packets through a corresponding one of the configured pseudowires. Once EVPN is configured within service provider network 12, customer devices 4 within customer networks 6 may communicate with one another via EVPN as if they were directly connected L2 networks.

In order to establish the EVPN, an EVPN protocol executing on PE routers 10A-10C triggers EVPN designated forwarder (DF) election for Ethernet segment 14. This may be accomplished, for example, by EVPN protocol executing on each of PE routers 10A-10C that participates in the Ethernet segment directing the router to output a routing protocol message advertising an Ethernet Segment Identifier (ESI), which is typically unique across all EVPN instances (EVIs). In addition, for each EVI, the EVPN protocol directs the router to output a routing protocol message advertising an Ethernet Auto-Discovery (AD) route specifying the relevant ESI for the Ethernet segment coupled to the EVPN instance. Once the EVPN is operational for the {EVI, ESI}pair, PE routers 10A-10B output routing protocol messages to remote PE router 10C to announce media access control (MAC) addresses associated with customer equipment in customer network 6B.

For example, in typical operation, PE routers 10A-10C communicate using the Border Gateway Protocol (BGP) and the EVPN protocol specifies BGP Network Layer Reachability Information (NLRI) for the EVPN and may define different route types for conveying EVPN information via the BGP routing protocol. The EVPN NLRI is typically carried in BGP using BGP Multiprotocol Extensions. An Ethernet Segment route advertised by each PE router 10A-10C using BGP includes a Route Distinguisher and Ethernet Segment Identifier. An Ethernet AD route advertised by each PE router 10A-10C for each EVI, specifies a Route Distinguisher (RD) (e.g., an IP address of an MPLS Edge Switch (MES)), ESI, Ethernet Tag Identifier, and MPLS label. Subsequent BGP media access control (MAC) routes output by PE router 10A-10C announce MAC addresses of customer equipment 4 for the EVPN include a RD, ESI, Ethernet Tag Identifier, MAC address and MAC address length, IP address and IP address length, and MPLS label.

In active-standby mode in which one of PE router 10A or 10B forwards network traffic from PE router 10C to CE router 8B, the EVPN protocol executing on each PE router 10A-10C initiates EVPN DF election for the Ethernet segment on a per-EVPN instance basis, and participates within that election for each EVPN instance. That is, DF election may be at the granularity of each ESI, EVI combination. If elected DF, one of PE routers 10A-10C elected as DF forwards traffic from the EVPN to local CE router 8B. Additional example information with respect to the EVPN protocol is described in "BGP MPLS Based Ethernet VPN," draft-ietf-12vpn-evpn-11, Internet Engineering Task Force (IETF), July 2, 2014, the entire contents of which are incorporated herein by reference.

In the example of FIG. 1, when providing the EVPN service to customer networks 6, PE routers 10 and CE routers 8 typically perform MAC address learning to efficiently forward L2 network communications in system 2. That is, as PE routers 10 and CE routers 8 forward Ethernet frames, the routers learn L2 state information for the L2 network, including MAC addressing information for customer equipment 4 within the network and the physical ports through which customer equipment 4 are reachable. PE routers 10 and CE routers 8 typically store the MAC addressing information in MAC tables associated with respective interfaces. When forwarding an individual Ethernet frame received on one interface, a router typically broadcasts the Ethernet frame to all other interfaces associated with the EVPN unless the router has previously learned the specific interface through which the destination MAC address specified in the Ethernet frame is reachable. In this case, the router forwards a single copy of the Ethernet frame out the associated interface.

Moreover, as PE routers 10 learn the MAC address for customer equipment 4 reachable through local attachment circuits, the PE routers 10 utilize MAC address route advertisements of a layer three (L3) routing protocol (i.e., BGP in this example) to share the learned MAC addresses and to provide an indication that the MAC addresses are reachable through the particular PE router that is issuing the route advertisement. In the EVPN implemented using PE routers 10 for a given EVI, each of PE routers 10 advertises the locally learned MAC addresses to other PE routers 10 using a BGP route advertisement, also referred to herein as a "MAC route" or a "MAC Advertisement route." As further described below, a MAC route typically specifies an individual MAC address of customer equipment 4 along with additional forwarding information, such as a route descriptor, route target, layer 2 segment identifier, MPLS label, etc. In this way, PE routers 10 use BGP to advertise and share the MAC addresses learned when forwarding layer two communications associated with the EVPN. Accordingly, PE routers 10 may perform both local learning and remote learning of MAC addresses.

Each of PE routers 10 (e.g., PE router 10B) utilizes MAC routes specifying the MAC addresses learned by other PE routers to determine how to forward L2 communications to MAC addresses that belong customer equipment 4 connected to other PEs, i.e., to remote CE routers and/or customer equipment behind CE routers operatively coupled to PE routers. That is, each of PE routers 10 determine whether Ethernet frames can be sent directly to a particular one of the other PE routers 10 or whether to treat the Ethernet frames as so called "BUM" traffic (Broadcast, Unidentified Unicast or Multicast traffic) that is to be flooded within the EVPN based on the MAC addresses learning information received from the other PE routers.

As shown in FIG. 1, CE routers 8 may be multi- and/or singly-homed to one or more of PE routers 10. In EVPN, a CE router may be said to be multi-homed when it is coupled to two physically different PE routers on the same EVI when the PE routers are resident on the same physical Ethernet Segment. As one example, CE router 8B is coupled to PE routers 10A and 10B via links 16D and 16E, respectively, where PE routers 10A and 10B are capable of providing access to EVPN for L2 customer network 6B via CE router 8B. In instances where a given customer network (such as customer network 6B) may couple to service provider network 12 via two different and, to a certain extent, redundant links, the customer network may be referred to as being "multi-homed." In this example, CE router 8B may be multi-homed to PE routers 10A and 10B because CE router 8B is coupled to two different PE routers 10A and 10B via separate and, to a certain extent, redundant links 16D and 16E where both of PE routers 10A and 10B are capable of providing access to EVPN for L2 customer network 6B. Multi-homed networks are often employed by network operators so as to improve access to EVPN provided by service provider network 12 should a failure in one of links 16D, 16E, and 16F occur. In a typical EVPN configuration, only the multi-homing PEs 10A-10B participate in DF election for each ESI. PE 10C not connected to the ESI has no direct knowledge of the DF election result for a give ESI.

In active-active mode configurations, remote PE 10C is typically configured to install the MAC routes for the ESI, such that traffic downstream traffic to customer network 6B is balanced between PE routers 10A and 10B, which are each included in the ESI. In the example of FIG. 1, PE routers 10A and 10B may be configured in EVPN active-active mode, such that PE router 10C load-balances downstream network traffic to customer network 6B between PE routers 10A and 10B. In active-active mode, each of PE routers 10A and 10B may be configured as part of the same Ethernet Segment and therefore have the same Ethernet Segment Identifier. PE routers 10A and 10B may each advertise Ethernet AD routes to PE router 10C that specify respective IP addresses and ESIs for each of PE routers 10A and 10B. In this way, PE router 10C may configure one or more of its forwarding units (or "forwarding engines") to load balance network traffic destined for customer network 6B between PE routers 10A and 10B.

An EVPN, such as illustrated in FIG. 1, may operate over an Multi-Protocol Label Switching (MPLS) configured network and use MPLS labels to forward network traffic accordingly. MPLS is a mechanism used to engineer traffic patterns within Internet Protocol (IP) networks according to the routing information maintained by the routers in the networks. By utilizing MPLS protocols, such as the Label Distribution protocol (LDP) or the Resource Reservation Protocol with Traffic Engineering extensions (RSVP-TE), a source device can request a path through a network to a destination device, i.e., a Label Switched Path (LSP). An LSP defines a distinct path through the network to carry MPLS packets from the source device to a destination device. Using a MPLS protocol, each router along an LSP allocates a label and propagates the label to the closest upstream router along the path. Routers along the path add or remote the labels and perform other MPLS operations to forward the MPLS packets along the established path.

As shown in the example of FIG. 1, PE routers 10A-10C and provider router 18 may provide an MPLS core for sending network packets from customer network 6A to and from customer network 6B. Each of PE routers 10A-10C implement the MPLS protocol and apply one or more MPLS labels, i.e., a label stack, to network packets in accordance with routing and forwarding information configured at each respective PE router. In an EVPN, a label stack applied to a network packet may include multiple labels. For instance, a label stack may include an outer label and an inner label.

The outer label serves as a "transport label" that uniquely identifies a PE router in an MPLS core. That is, each of PE routers 10A-10C may exchange control plane messages at configuration and startup that specify an outer label that uniquely identifies each respective PE router. For instance, PE router 10A may send control plane messages that specify an outer label that identifies PE router 10A to PE routers 10B-10C. PE routers 10B-10C may configure their respective forwarding units such that network packets that include the outer label corresponding to PE router 10A are forwarded to PE router 10A.

The inner label, or "service label," of the MPLS label stack provides EVPN-specific configuration information. As described above, EVPN defines Ethernet AD routes, MAC advertisement routes, and Ethernet Segment routes. An Ethernet AD route, for example, may be structured according to the following format of Table 1:

**Table 1: AD route advertisement**

| |
|---|
| Route Descriptor (8 octets) |
| Ethernet Segment Identifier (10 octets) |
| Ethernet Tag ID (4 octets) |
| MPLS Label (3 octets) |

In one example, PE router 10A may send an Ethernet AD route to PE router 10C initially at startup and configuration that includes an MPLS label as shown above. PE router 10C may configure one or more of its forwarding units to apply the MPLS label of the Ethernet AD route from PE router 10A as the inner label in a label stack applied to network packets that are destined to PE router 10A. PE router 10C would then apply the transport label identifying PE router 10A as the outer label in the label stack. In this way, the inner label provides EVPN-specification configuration information about the Ethernet AD route that PE router 10C uses to forward network packets through the EVPN.

In EVPN architectures, such as FIG. 1, a link may fail, such as 17B between provider router 18 and PE router 10B. In such examples, PE router 10C may determine that link 17B has failed only by determining that BGP neighborship between PE routers 10C and 10B has failed. Once PE router 10C has determined that PE router 10B is no longer available to forward network traffic to customer network 6B, PE router 10C may take corrective action by removing PE router 10B from an adjacency list that includes the members of the Ethernet Segment that previously included PE routers 10A and 10B. PE router 10C, upon updating the adjacency list, may then start sending traffic only to PE router 10A and stop load balancing network traffic between PE routers 10A and 10B.

Because BGP is a control-plane messaging protocol, PE router 10C may not determine for a number of seconds that link 17B has failed or that network traffic is no longer flowing from PE router 10C to CE router 8B via PE router 10B. Until PE router 10A has taken the corrective action to remove PE router 10B from the adjacency list and start sending traffic only to PE router 10A, PE router 10C may continue sending traffic for, potentially a number seconds, to PE router 10B although the traffic will be dropped at provider router 18B because communication link 17B has failed.

Techniques of this disclosure may reduce the amount of time that network traffic is dropped at provider router 18 by performing local repair at provider router 18 in the event that link 17B or PE router 10B fails. By performing local repair at provider router 18 in the event of a failure of link 17B or PE router 10B, the amount of time that network traffic is dropped may be reduced from seconds to an order of milliseconds, such as less than 100 or 50 milliseconds. To provide local repair at provider router 18, techniques of the disclosure may configure provider router 18 to run BGP and EVPN in "passive mode." In some examples of passive mode, provider router 18 will not perform any MAC learning that is performed by other PE routers in an EVPN and provider router 18 will be a pure listener for EVPN routes. In some examples of passive mode, provider router 18 will be a pure listener for only a specific type of EVPN route, such as an Ethernet AD route.

In the example of FIG. 1, provider router 18 may be configured to operate in passive mode. As such, when PE routers 10A and 10B advertise Ethernet AD routes to PE router 10C, provider router 18 may listen for such Ethernet AD routes and further process contents of the Ethernet AD routes rather than merely forwarding the Ethernet AD routes to PE router 10C. Specifically, when listening for Ethernet AD routes, provider router 18 may inspect the packet header of an incoming packet and determine that the packet specifies an Ethernet AD route. Provider router 18 may store information associated with the Ethernet AD route such as the route descriptor (or IP address of the PE router), Ethernet Segment Identifier, or any other information included in the Ethernet AD route. Provider router 18 may forward the packet specifying the Ethernet AD route to its destination.

Provider router 18 may determine that ESIs in the Ethernet AD routes from each of PE routers 10A and 10B match. For instance the ESI may be a value of 200. Because the ESIs of the Ethernet AD routes are the same, provider router 18 may determine that each of PE routers 10A and 10B are included in Ethernet Segment 14, which corresponds to the same ESI 200. Because provider router 18 has determined that each of PE routers 10A and 10B are included in Ethernet Segment 14, provider router 18 can protect PE router 10B by providing local repair in the event of link 17B or PE router 10B failing. In some examples, such as FIG. 1, provider router 18 may be directly coupled to PE router 10B by a communication link, i.e., provider router 18 may be one hop from PE router 10B.

In response to determining, based on the Ethernet AD routes, that PE routers 10A and 10B are included in Ethernet Segment 14, provider router 18 may install a primary route and backup route in forwarding structures (e.g., forwarding tables, context tables, radix trees, next hop lists, chained next hops, or the like) of one or more of provider router 18's forwarding units to provide local repair in the event of a failure at link 17B or PE router 10B. Specifically, the primary route may be a route from provider router 18 to PE router 10B. When forwarding traffic using the primary route, provider router 18 may perform a lookup on the outer or "top" label of packets to identify a transport label that corresponds to the LSP between PE router 10C and provider router 18. Provider router 18 may store the primary route in a forwarding table, where the primary route specifies a forwarding action to remove the outer transport label and forward the network packet using an egress interface of provider router 18 that couples provider router 18 to PE router 10B. Provider router 18 may initially forward packets to PE router 10B that have an EVPN label stack with an inner label specifying PE router 10B while no failure has occurred at link 17B or PE router 10B. Because PE router 10B is one hop away from provider router 18 in FIG. 1, it may not necessary to append additional transport labels to packets forwarded to PE router 10B. If PE router 10B were multiple hops away from provider router 18, provider router 18 may attach one or more transport labels that correspond to an LSP between provider router 18 and PE router 10B in order to tunnel the packets to PE router 10B. Additional transport labels to tunnel the packets may be exchanged by PE routers 10A-10C and provider router 18 using RSVP-TE, SPRING, LDP or any other suitable protocol.

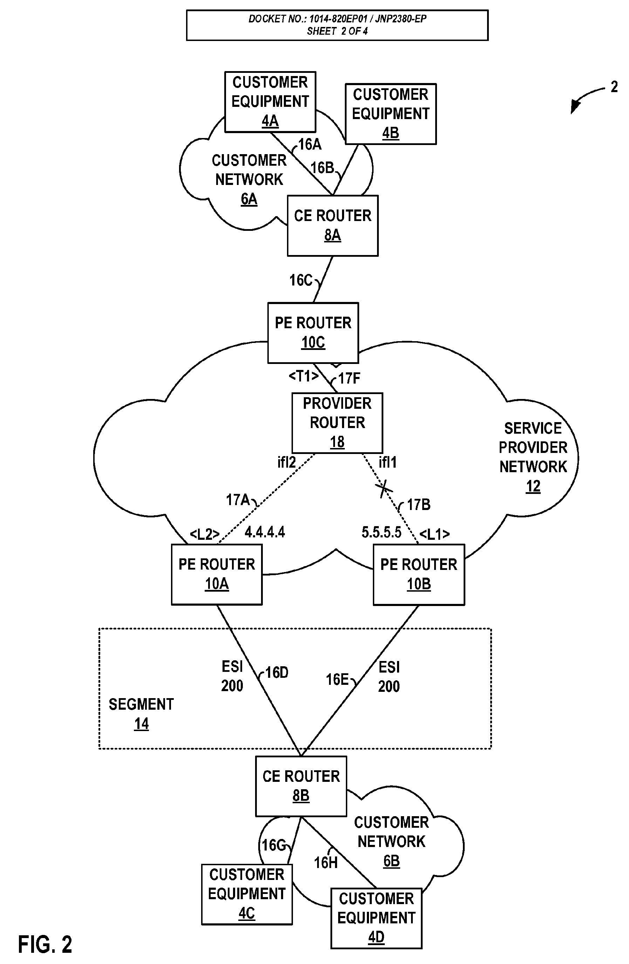

As described above, provider router 18 may also install, in forwarding structures of one or more forwarding units of provider router 18, a backup route from provider router 18 to PE router 10A. As further described in FIGS. 2-5, provider router 18 may maintain a context table, in addition to the forwarding table that includes the primary route, for each PE router for which provider router 18 provides protection and local repair. A context table may include routes represented as pairs of lookup values (or keys) and corresponding forwarding actions. Provider router 18 may store the backup route in a context table for PE router 10B that is maintained by provider router 18. The forwarding table that includes the primary route may include a pointer, reference or other identifier to the context table that includes the backup route. More specifically, provider router 18 may store, in the forwarding table, a lookup value that corresponds to the transport label for an LSP between PE router 10C and provider router 18. The forwarding actions for the lookup value may include initially forwarding packets that match the lookup value using the primary route, but if link 17B or PE router 10B has failed, selecting the pointer, reference or other identifier to the context table in order to forward the packets using the backup route stored in the context table.

Provider router 18 may, when storing the backup route in the context table, store the inner label advertised by PE router 10B for Ethernet Segment 14 as the lookup value, and store a corresponding forwarding action that swaps the inner label of a packet having an EVPN label stack with the inner label advertised by PE router 10A for Ethernet Segment 14. The forwarding action may also specify forwarding the packet using an interface of provider router 19 that couples provider router 18 to PE router 10A either directly via a single hop or indirectly via a series of hops. If PE router 10A were multiple hops away from provider router 18, provider router 18 may attach one or more transport labels that correspond to an LSP between provider router 18 and PE router 10A in order to tunnel the packets to PE router 10A. Additional transport labels to tunnel the packets may be exchanged by PE routers 10A-10C and provider router 18 using RSVP-TE, SPRING, LDP or any other suitable protocol.

Upon installing the primary and backup routes, provider router 18 may initially configure its one or more forwarding units to forward network traffic using the primary route, while link 17B and PE router 10B are able to forward network packets to customer network 6B. Upon detecting that link 17B or PE router 10B has failed, provider router 18 may configure its one or more forwarding units to stop using the primary route and start using the backup route. For instance, provider router 18 may be directly coupled to PE router 10B by a physical communication link 17B. Provider router 18 may have a physical interface that couples communication link 17B to a forwarding unit of provider router 18 that has the primary and backup routes installed. As such, the forwarding unit may detect if communication link 17B has failed, such as due to a detected voltage drop or lost connection. In such examples, the forwarding unit of provider router 18 may detect the failure of communication link 17B on the order of milliseconds.

Upon configuring the primary and backup routes, provider router 18 may receive network packets that include an EVPN label stack comprising an outer transport label for the LSP between provider router 18 and PE router 10C and an inner label that was previously advertised by PE router 10B with an Ethernet AD route. Provider router 18 may perform a lookup on the outer label, and perform the corresponding forwarding action to remove the outer label and forward the network packet PE router 10B.

In response to later determining that provider router 18 is unable to send network traffic to the protected PE router 10B due to a link failure of link 17B, provider router 18 may update its forwarding unit to forward network traffic using the backup route. For instance, provider router 18 may receive a network packet that includes an EVPN label stack comprising an outer transport label for the LSP between provider router 18 and PE router 10C and an inner label that was previously advertised by PE router 10B with an Ethernet AD route. Because link 17B has failed, when provider router 18 performs a lookup on the outer label of the packet, provider router 18 may select the pointer, reference or other identifier to the context table, and based on a lookup on the context table perform the forwarding action of the backup route that corresponds to the inner label of the packet. Specifically, provider router 18 may swap the inner label of the packet that corresponds to PE router 10B with an inner label previously advertised by PE router 10A. If PE router 10A is more than one hop away from provider router 18, then provider router 18 may attach an outer transport label that was previously advertised by PE router 10A. Provider router 18 may then forward the packet to PE router 10A using an interface that communicatively couples provider router 18 to PE router 10A.

By detecting the failure of link 17B and immediately performing local repair to forward network packets using the backup route, techniques of the disclosure implemented at provider router 18 may reduce the amount of time that packets are dropped while PE router 10C performs global repair to re-direct packets only to PE router 10A. That is, during the time that PE router 10C is withdrawing PE router 10B from its adjacency list for the ESI, provider router 18 may reroute packets to PE router 10A, which is in the same ESI, rather than dropping the packets. By operating provider router 18 in passive mode, provider router 18 is able to preemptively identify PE routers operating in active-active mode in the same Ethernet Segment and configure the backup route to perform local repair in the event of a link failure, thereby potentially reducing the amount of time that packets may be dropped at provider router 18 in the event of link 17B or PE router 10B failing.

FIG. 2 is a block diagram illustrating further details of the example system of FIG. 1, in accordance with one or more techniques of the disclosure. FIG. 2 illustrates the components of system 2 as described with respect to FIG. 1. In FIG. 2, at initial configuration and startup PE routers 10A-10C may exchange or otherwise advertise Ethernet AD routes, as described in FIG. 1. For example, in FIG. 2, PE router 10A may advertise an Ethernet AD route that includes a label L2 to each of PE routers 10C and 10B. The label L2 may be an MPLS label for ESI 200 that includes PE router 10A. PE router 10C may include the MPLS label as the inner label for EVPN network packets sent from PE router 10C to PE router 10A. PE router 10B may also advertise an Ethernet AD route that includes a label L1 to each of PE routers 10A and 10C. The label L1 may be an MPLS label for ESI 200 that includes PE router 10B. PE router 10C may include the MPLS label as the inner label for EVPN network packets sent from PE router 10C to PE router 10B.

As described in FIG. 1, PE routers 10A-10C and provider router 18 may provide an MPLS core to forward network packets within service provider network 12. To provide the MPLS core, PE routers 10A-10C and provider router 18 may execute an MPLS protocol. PE routers 10A-10C and provider router 18 may, as part of the MPLS protocol, advertise transport labels to one or more other routers in service provider network 12. A transport label may correspond to a particular path or tunnel in service provider network between network devices. For instance, provide router 18 may advertise a transport label T1 that corresponds to a path or tunnel between PE router 10C and provider router 18.

Based on routes determined using equal-cost multi-path routing (ECMP) and/or best-path routing, each of PE routers 10A-10C and provider router 18 may configure its forwarding state to push and pop MPLS labels (corresponding to other nodes in the network) onto packets in order to forward such packets using the determined route to the destination. For instance, each of PE routers 10A-10C and provider router 18 may perform path selection using topology information learned by way of a gateway protocol, such as BPG or Interior Gateway Protocol (IGP), to compute a shortest path within service provider network 12 on a hop-by-hop basis based on the routing information maintained by the routers. Each of PE routers 10A-10C and provider router 18 may then select a next hop along the locally computed shortest path and install forwarding information associated with the selected next hop in a forwarding plane of the router, wherein the forwarding information identifies a network interface to be used when forwarding traffic and one or more labels to be applied when forwarding the traffic out the interface. The routers use the next hops with the assigned labels to forward traffic hop-by-hop.

In the example of FIG. 2, PE router 10C may determine that a path from PE router 10C to customer network 6B includes, as a next hop, provider router 18. As such, PE router 10C may apply transport label T1 to network packets destined to customer network 6B because customer network 6B is reachable via provider router 18. Provider router 18 may perform a lookup on transport label T1 for a packet, based on its forwarding state, and swap, pop or otherwise update the label stack for the packet in order to forward the packet to a next hop such as PE router 10A or PE router 10B en route to customer network 6B.

In FIG. 2, provider router 18 may listen for Ethernet AD routes sent by PE routers 10A and 10B to PE router 10C. For instance, provider router 18 may intercept an Ethernet AD route from PE router 10A that specifies the route descriptor (e.g., IP address 4.4.4.4), Ethernet Segment Identifier (e.g., 200), Ethernet Tag ID and MPLS label (e.g., L2). Provider router 18 may intercept an Ethernet AD route from PE router 10B that specifies the route descriptor (e.g., IP address 5.5.5.5), Ethernet Segment Identifier (e.g., 200), Ethernet Tag ID and MPLS label (e.g., L1). Provider router 18 may further process the Ethernet AD routes as described in this disclosure, but may forward to the Ethernet AD routes to PE router 10C as well.

Provider router 18 may determine that the ESI 200 for each of the Ethernet AD routes is the same. As such, provider router 18 may, in some examples, provide protection for PE router 10B. For example, provider router 18 may generate a forwarding table for primary and backup routes, as shown in Table 1:

**Table 1**

| Lookup Value | Forwarding Action | |
|---|---|---|
| T1 | → To 5.5.5.5 via ifl1, POP | (primary) |
| | To table _5.5.5.5.mpls.0_, POP | (backup) |

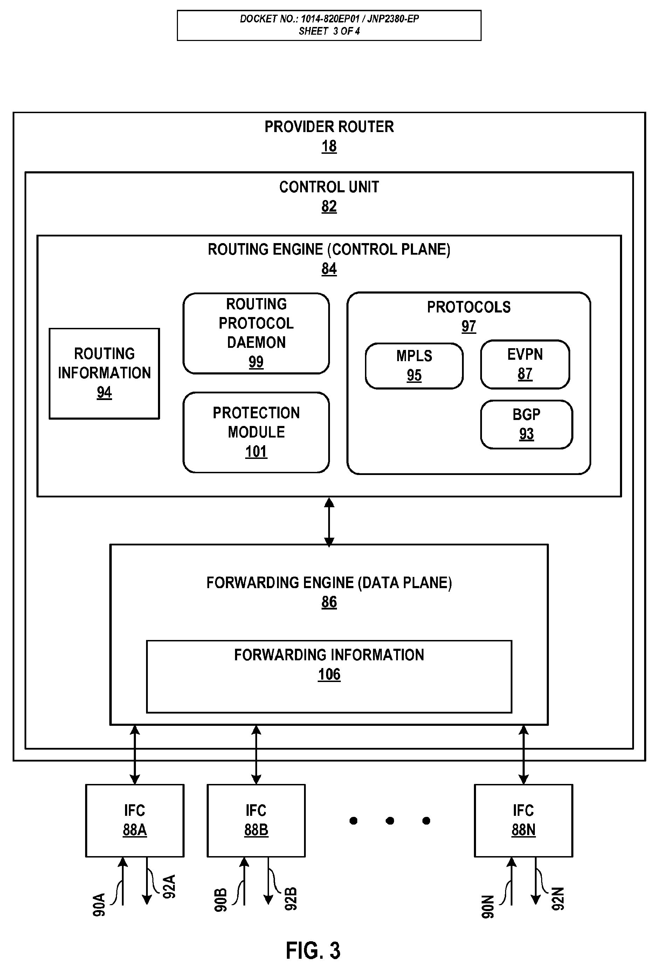

As shown in Table 1, provider router 18 stores a lookup value for the transport label T1 that was advertised by provider router 18 to PE router 10C. Table 1 also includes two different forwarding actions-a first forwarding action for the primary route (primary) and a second forwarding action for the backup route (backup). The → indicator indicates which forwarding action is active for the lookup value. As shown in FIG. 1, if provider router 18 receives a network packet with a transport label T1, it will perform a lookup and perform the forwarding action for the primary route because the → indicator indicates that the primary route is active. As described in FIG. 3, the selection of the forwarding action may be implemented in provide router 18 using a next hop list in which a selector block indicates which forwarding action is active.

In Table 1, the forwarding action for the primary route includes popping or removing the outer transport label T1 from the network packet, and forwarding the packet out of egress interface ifl1 to IP address 5.5.5.5, which corresponds to PE router 10B. Because PE router 10B is one hop away from provider router 18 and coupled by ifl1 via communication link 17B, provider router 18 does not have to attach any additional transport labels. If PE router 10B were more than one hop away from provider router 18, then the forwarding action for the primary route may include pushing one or more additional transport labels onto the packet that correspond to a tunnel from provider router 18 to PE router 10B.

Table 1 also includes a forwarding action for the backup route. Specifically the forwarding action includes popping the outer transport table T1 and further processing the network packet based on the backup route specified in context table table _5.5.5.5.mpls.0_, which is illustrated in Table 2. Specifically, the forwarding action for the backup route in table 1 may include a pointer, reference or other identifier usable by provider router 18 to identify the context table for PE router 10B.

Provider router 18 may generate a context table for PE router 10B that is stored and used by provider router 18, as illustrated in Table 2. The context table may include a backup route as show in Table 2:

**Table 2: Table_5.5.5.5.mpls.0_**

| Lookup Value | Forwarding Action |
|---|---|
| L1 | Swap L2, push to tunnel between provider router 18 and PE router 10A |

In the context table illustrated as Table 2, the lookup value is the MPLS label L1 previously advertised by PE router 10B. The forwarding action includes swapping inner label L1 for the label L2 that was previously advertised by PE router 10A in its Ethernet AD route. By swapping the label L1 for the label L2, a packet that initially has an inner label of L1 will not include the label L1 after the swap but rather the label L2. In addition to swapping the inner label, if PE router 10A is one hop away from provider router 18 and coupled by ifl2 via communication link 17A, provider router 18 does not have to attach any additional transport labels. If PE router 10A is more than one hop away from provider router 18 as in FIG. 2, then the forwarding action for the backup route may include pushing one or more additional transport labels onto the packet that correspond to a tunnel from provider router 18 to PE router 10A. In either case, when using the backup route, provider router 18 may forward the network packet to PE router 10A using interface ifl2 which is coupled to a network device included in path between provider router 18 and PE router 10A.

Upon configuring the primary and backup routes, provider router 18 may receive network packets that include an EVPN label stack comprising an outer transport label for the LSP between provider router 18 and PE router 10C and the inner label L1 that was previously advertised by PE router 10B with an Ethernet AD route. Provider router 18 may perform a lookup on the outer label T1, and perform the forwarding action corresponding to the primary route as shown in Table 1.

In response to later determining that provider router 18 is unable to send network traffic to the protected PE router 10B due to a link failure of link 17B, provider router 18 may update its forwarding unit to forward network traffic using the backup route. For instance, provider router 18 may receive a network packet that includes an EVPN label stack comprising an outer transport label T1 and an inner label L1. Because link 17B has failed, when provider router 18 performs a lookup on the outer label T1, provider router 18 may select the pointer, reference or other identifier to the context table, and based on a lookup on the context table perform the forwarding action of the backup route that corresponds to the inner label of the packet. For instance, provider router 18 may update Table 1 to make the backup route active as shown in Table 3:

**Table 3**

| Lookup Value | Forwarding Action | |
|---|---|---|
| T1 | To 5.5.5.5 via ifl1, POP | (primary) |
| | → To table _5.5.5.5.mpls.0_, POP | (backup) |

As shown in Table 3 by the indicator →, the backup route is now active and used by provider router 18 to forward network packets having a transport label T1.

Based on the forwarding action for the backup route as illustrated in Table 2, provider router 18 may swap the inner label L1 of the packet that corresponds to PE router 10B with the inner label L2 previously advertised by PE router 10A. Provider router 18 may apply any additional transport labels if PE router 10A is more than one hop away from provider router 18, or if provider router 18 is one hop away from PE router 10A, then provider router 18 may forward the network packet without attaching any additional transport labels to the packet. Provider router 18 may then forward the network packet to PE router 10A using interface ifl2 that couples provider router 18 to PE router 10A via communication link 17A.

FIG. 3 is a block diagram illustrating an example provider router 18 capable of performing the disclosed techniques. In general, provider router 18 may operate substantially similar to provider router 18 of FIG. 1. In this example, provider router 18 includes interface cards 88A-88N ("IFCs 88") that receive packets via incoming links 90A-90N ("incoming links 90") and send packets via outbound links 92A-92N ("outbound links 92"). IFCs 88 are typically coupled to links 90, 92 via a number of interface ports. Provider router 18 also includes a control unit 82 that determines routes of received packets and forwards the packets accordingly via IFCs 88.

Control unit 82 may comprise a routing engine 84 and a packet forwarding engine 86. Routing engine 84 operates as the control plane for provider router 18 and includes an operating system that provides a multi-tasking operating environment for execution of a number of concurrent processes. Routing engine 84, for example, execute software instructions to implement one or more control plane networking protocols 97. For example, protocols 97 may include one or more routing protocols, such as Border Gateway Protocol (BGP) 99 for exchanging routing information with other routing devices and for updating routing information 94. Protocols 97 may also include Multiprotocol Label Switching Protocol (MPLS) 95 for tunneling packets within service provider network 12.

Routing protocol daemon (RPD) 99 may use protocols 97 to exchange routing information, stored in routing information 94, with other routers. Routing information 94 may include information defining a topology of a network. RPD 99 may resolve the topology defined by routing information in routing information 94 to select or determine one or more routes through the network. RPD 99 may then generate forwarding information 106 and update forwarding plane 86 with routes from forwarding information 106.

Routing information 94 may describe a topology of the computer network in which provider router 18 resides, and may also include routes through the shared trees in the computer network. Routing information 94 describes various routes within the computer network, and the appropriate next hops for each route, i.e., the neighboring routing devices along each of the routes. Routing engine 84 analyzes stored routing information 94 and generates forwarding information 106 for forwarding engine 86. Forwarding information 106 may associate, for example, network destinations for certain multicast groups with specific next hops and corresponding IFCs 88 and physical output ports for output links 92. Forwarding information 106 may be a radix tree programmed into dedicated forwarding chips, a series of tables, a complex database, a link list, a radix tree, a database, a flat file, or various other data structures.

In addition, routing engine 84 executes EVPN protocol 87, which operates to communicate with other routers to establish and maintain an EVPN, such as the EVPN of FIG. 1, for transporting L2 communications through an intermediate network so as to logically extend an Ethernet network through the intermediate network. EVPN protocol 87 may, for example, communicate with EVPN protocols executing on remote routers. As described in this disclosure, BGP 93 and/or EVPN 87 may operate in passive mode. In some examples of passive mode, EVPN 87 will not perform any MAC learning that is performed by other PE routers in an EVPN and provider router 18 will be a pure listener for EVPN routes. In some examples of passive mode, provider router 18 will be a pure listener for only a specific type of EVPN route, such as an Ethernet AD route. In example embodiments, BGP 93 and EVPN 87 operate in accordance with the techniques described herein so as to listen for and process Ethernet A-D per EVI routes that have been sent by other PE routers 10.

In some examples, forwarding engine 86 arranges forwarding structures as next hop data that can be chained together as a series of "hops" along an internal packet forwarding path for the network device. In many instances, the forwarding structures perform lookup operations within internal memory of ASICs included in forwarding engine 86, where the lookup may be performed against a tree (or trie) search, a table (or index) search. Other example operations that may be specified with the next hops include filter determination and application, or a rate limiter determination and application. Lookup operations locate, within a lookup data structure (e.g., a lookup tree), an item that matches packet contents or another property of the packet or packet flow, such as the inbound interface of the packet. The result of packet processing in accordance with the operations defined by the next hop forwarding structure within ASICs determines the manner in which a packet is forwarded or otherwise processed by forwarding engine 86 from its input interface on one of IFCs 88 to its output interface on one of IFCs 88.

In FIG. 3, forwarding engine 86 may listen for Ethernet AD routes sent by PE routers 10A and 10B to PE router 10C. For instance, forwarding engine 86 may intercept a packet that specifies an Ethernet AD route from PE router 10A that specifies the route descriptor, Ethernet Segment Identifier, Ethernet Tag ID and MPLS label. Forwarding engine 86 may intercept an Ethernet AD route from PE router 10B that specifies the route descriptor, Ethernet Segment Identifier, Ethernet Tag ID and MPLS label. If forwarding engine 86 determines that the packet specifies an Ethernet AD route, forwarding engine 86 may send the packet data to protection module 101.

Protection module 101 may determine that the ESI for each of the Ethernet AD routes is the same. As such, provider router 18 may, in some examples, provide protection for PE router 10B. For example, protection module 101 may cause RPD 99 to generate or update a forwarding table for primary and backup routes, as shown in Table 1 of FIG. 2. RPD 99 stores, in forwarding information 106, a lookup value for the transport label T1 that was advertised by provider router 18 to PE router 10C. The forwarding table also includes two different forwarding actions-a first forwarding action for the primary route (primary) and a second forwarding action for the backup route (backup).

In the forwarding table configured by RPD 99 in forwarding information 106, the forwarding action for the primary route includes popping or removing the outer transport label T1 from the network packet, and forwarding the packet out of egress interface ifl1 (e.g., IFC 88A) to IP address 5.5.5.5, which corresponds to PE router 10B. The forwarding table configured by RPD 99 in forwarding information 106 also includes a forwarding action for the backup route. Specifically the forwarding action includes popping the outer transport label T1 and further processing the network packet based on the backup route specified in context table table _5.5.5.5.mpls.0_, which is illustrated in Table 2 of FIG. 2. Specifically, the forwarding action for the backup route in table 1 may include a pointer, reference or other identifier usable by provider router 18 to identify the context table for PE router 10B.

In the context table illustrated as Table 2, the lookup value is the MPLS label L1 previously advertised by PE router 10B. The forwarding action includes swapping inner label L1 for the label L2 that was previously advertised by PE router 10A in its Ethernet AD route. By swapping the label L1 for the label L2, a packet that initially has an inner label of L1 will not include the label L1 after the swap but rather the label L2. When using the backup route, forwarding engine 86 may forward the network packet to PE router 10A using interface ifl2 (e.g., IFC 88B) which is coupled to a network device included in path between provider router 18 and PE router 10A.

RPD 99 may configure forwarding information 106 to include one or more primary and backup next hops that correspond to the primary and backup routes. For instance, RPD 99 may configure a primary next hop for the primary route in forwarding information 106. The primary next hop causes forwarding engine 86 to process packets in accordance with the primary route. PRD 99 may also configure a backup next hop for the backup route in forwarding information 106. The backup next hop causes forwarding engine 86 to process packets in accordance with the backup route.

RPD 99 may include each of the primary and backup next hops in a next hop list stored in forwarding information 106. The next hop list may have an active element and one or more inactive elements. Accordingly, RPD 99 may initially configure forwarding information 106 such that the active element is initially the primary next hop and the backup next hop is an inactive element. In some examples, each element in the next hop list may have a weight. The active element may have the lowest assignment weight and the backup next hop may have a weight that is higher than the weight of the active element.

As such, provider router 18 may receive network packets that include an EVPN label stack comprising an outer transport label for the LSP between provider router 18 and PE router 10C and the inner label L1 that was previously advertised by PE router 10B with an Ethernet AD route. Provider router 18 may perform a lookup on the outer label T1, and perform the forwarding action corresponding to the primary route as shown in Table 1 of FIG. 2.

At a later time, forwarding engine 86 may determine that provider router 18 is unable to send network traffic to the protected PE router 10B due to a link failure of link 17B. For instance, forwarding engine 86 may determine that IFC 88A no longer has a connection to PE router 10B. Forwarding engine 86 may, based on forwarding information 106, configure forwarding engine 86 to forward network traffic using the backup route. For instance, forwarding engine 86 may set the active element in the next hop list to the backup next hop that corresponds to the backup route. In such examples, forwarding engine 86 may set the active element using the backup route without requiring reprogramming of forwarding engine 86 by routing engine 84. Forwarding engine 86 may, for instance, set the weight for the next hop that corresponds to the backup route to be lower than the weight for the next hop that corresponds to the primary route.

Provider router 18 may receive a subsequent network packet that includes an EVPN label stack comprising an outer transport label T1 and an inner label L1. Because link 17B has failed, when forwarding engine 86 performs a lookup on the outer label T1, forwarding engine 86 may select the pointer, reference or other identifier to the context table, and based on a lookup on the context table perform the forwarding action of the backup route that corresponds to the inner label of the packet.

Based on the forwarding action for the backup route, forwarding engine 86 may swap the inner label L1 of the packet that corresponds to PE router 10B with the inner label L2 previously advertised by PE router 10A. Forwarding engine 86 may apply any additional transport labels if PE router 10A is more than one hop away from provider router 18, or if provider router 18 is one hop away from PE router 10A, then provider router 18 may forward the network packet without attaching any additional transport labels to the packet. Provider router 18 may then forward the network packet to PE router 10A using interface ifl2 (e.g., IFC 88B) that couples provider router 18 to PE router 10A via communication link 17A.

The architecture of provider router 18 illustrated in FIG. 3 is shown for as being by way of example only. The scope is not limited to this architecture. In other examples, provider router 18 may be configured in a variety of ways. In one example, some of the functionally of control unit 82 may be distributed within IFCs 88. In another example, control unit 82 may comprise a plurality of packet forwarding engines operated as slave routers.

Control unit 82 may be implemented solely in software, or hardware, or may be implemented as a combination of software, hardware, or firmware. For example, control unit 82 may include one or more processors which execute software instructions. In that case, the various software modules of control unit 82 may comprise executable instructions stored on a computer-readable medium, such as computer memory or hard disk.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chip set.

If implemented in hardware, this disclosure may be directed to an apparatus such a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. In further examples, a computer-readable medium may include transmission media such as carrier signals or waves that can be used to transmit data and/or instructions between computing apparatus via wired and/or wireless channels.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

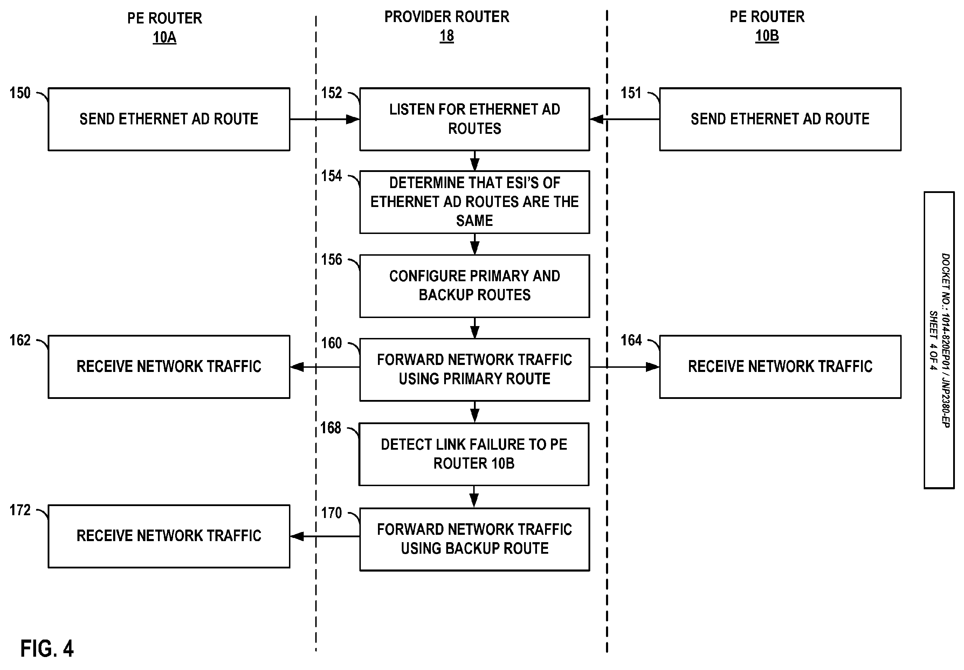

FIG. 4 is a flowchart illustrating example operations of multiple network devices in accordance with techniques of the disclosure. Example operations in accordance with techniques of the disclosure are illustrated for example purposes with respect to PE routers 10A-10B and provider router 18 of FIGS. 1-2. For simplicity, operation of other routers of the Ethernet segment, such as PE router 10C, is not shown in FIG. 4.

As shown in FIG. 4, the PE routers of the Ethernet segment, e.g., PE routers 10A, 10B of Ethernet segment 14, may, at initial configuration and startup, output BGP EVPN Ethernet Segment routes specifying an Ethernet Segment Identifier (ESI) (150, 151). For instance, each of PE routers 10A and 10B may advertise Ethernet AD routes to other PE routers in service provider network 12. Provider router 18, which is included within provider network 12, may operate in passive mode, such that provider router 18 listens for Ethernet AD routes sent by other PE routers but does not perform MAC learning in an EVPN. PE router 10 may listen for Ethernet AD routes (152) and receive packets specifying Ethernet AD routes from each of PE routers 10A and 10B.

Provider router 18 may determine that each ESI included in the respective Ethernet AD routes from PE routers 10A and 10B is the same (154). For instance, provider router 18 may compare the ESIs of the respective Ethernet AD routes and determines that the ESIs match one another. Upon determining that the ESIs are the same and that PE routers 10A and 10B are included in Ethernet Segment 14, provider router 18 may configure primary and backup routes in one or more of its forwarding units to provide protection for PE router 10B. The primary route may be a route from provider router 18 to PE router 10B. When forwarding traffic using the primary route, provider router 18 may perform a lookup on the outer or "top" label of packets to identify a transport label that corresponds to the LSP between PE router 10C and provider router 18. Provider router 18 may store the primary route in a forwarding table, where the primary route specifies a forwarding action to remove the outer transport label and forward the network packet using an egress interface of provider router 18 that couples provider router 18 to PE router 10B.

As described above, provider router 18 may also install, in forwarding structures of one or more forwarding units of provider router 18, a backup route from provider router 18 to PE router 10A. Provider router 18 may store a context table, in addition to the forwarding table that includes the primary route, for each PE router for which provider router 18 provides protection and local repair. Provider router 18 may store the backup route in a context table for PE router 10B that is maintained by provider router 18. The forwarding table that includes the primary route may include a pointer, reference or other identifier to the context table that includes the backup route.

Provider router 18 may, when storing the backup route in the context table, store the inner label advertised by PE router 10B for Ethernet Segment 14 as the lookup value, and store a corresponding forwarding action that swaps the inner label of a packet having an EVPN label stack with the inner label advertised by PE router 10A for Ethernet Segment 14. The forwarding action may also specify forwarding the packet using an interface of provider router 18 that couples provider router 18 to PE router 10A either directly via a single hop or indirectly via a series of hops. If PE router 10A is multiple hops from provider router 18, provider router 19 may attach one or more transport labels advertised by PE router 10 A to packets in order to tunnel the packets to PE router 10A.

Upon installing the primary and backup routes, provider router 18 may initially forward network traffic using the primary route, while link 17B and PE router 10B are able to forward network packets to customer network 6B (160). PE routers 10A and 10B may receive the network traffic from provider router 18 and forward the network traffic to CE router 8B. At a later time, provider router 18 may determine that a link failure has occurred at link 17B or that PE router 10B is no longer able to receive network traffic (168). In response to detecting the link failure, provider router 18 may configure one or more of its forwarding units to stop using the primary route and start using the backup route (170). Upon configuring its forwarding units to use the backup route, provider router 18 may begin forwarding network traffic for the ESI 200, which includes PE routers 10A and 10B, to PE router 10A. By performing local repair in the event of the link failure, provider router 18 may more quickly redirect network traffic to ESI 200 than global repair performed at PE router 10C. PE router 10A may receive the network packets from provider router 18 (172) and forward the network packets to CE router 8B.

Therefore, from one perspective, it has been described that in general, techniques enable an intermediate router to perform node protection for one or more other PE routers operably coupled to the intermediate router in active-active mode in an EVPN. The techniques may include configuring the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes without performing layer two (L2) address learning for the EVPN. The techniques may include installing a primary route to a protected router and a backup route from the intermediate router to a PE router other than the protected router, and in response to a link failure, forwarding network traffic using the backup route without requiring reprogramming the forwarding unit.

In addition to or as an alternative to the above, the following examples are described. The features described in any of the following examples may be utilized with any of the other examples described herein.
Example 1. A method comprising: configuring an intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN; installing, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and in response to determining within the forwarding unit of the intermediate router that network traffic cannot reach the protected PE router, forwarding network traffic using the backup route without requiring reprogramming the forwarding unit.
Example 2. The method of example 1, further comprising: storing, by the intermediate router, the primary route in a forwarding structure of the forwarding unit, wherein the forwarding structure comprises: the primary route, wherein the primary route defines a forwarding action to forward network traffic to the protected PE router, and a reference to a context table that includes the backup route.
Example 3. The method of example 2, further comprising: generating the context table for the protected PE router, wherein the backup route in the context table defines a forwarding action to swap a first service label of a network packet with a second service label, wherein the first service label corresponds to a particular Ethernet Segment Identifier and is advertised by the protected PE router, and wherein the second service corresponds to the particular Ethernet Segment Identifier and is advertised by the one other PE router of the at least two PE routers.
Example 4. The method of example 1, 2 or 3, wherein installing the primary route and the backup route comprises: configuring, by the provider edge and in the forwarding unit of the intermediate router, a primary next hop for the primary route and a backup next hop for backup route, wherein the primary next hop is configured to forward network traffic using the primary route prior to determining that network traffic cannot reach the protected PE router from the intermediate router, wherein the backup next hop is configured to forward network traffic using the backup route in response to determining that network traffic cannot reach the protected PE router from the intermediate router; forwarding, by the intermediate router and to the protected PE router, prior to determining that network traffic cannot reach the protected PE router from the intermediate router, network traffic using the primary route; and in response to determining that network traffic cannot reach the protected PE router from the intermediate router, forwarding, by the intermediate router and to PE router other than the protected PE router that is included in the same Ethernet Segment, network traffic using the backup route.
Example 5. The method of any of example 1 to 4, wherein the intermediate router is not directly coupled by a physical communication link to a customer-edge router in a customer network, and wherein the intermediate router is directly coupled by a physical communication link to the protected PE router.
Example 6. The method of any of examples 1 to 5, wherein the intermediate router operating in active-active mode does not perform MAC learning.
Example 7. The method of any of examples 1 to 6, wherein the one other PE router of the at least two PE routers is more than one hop away from the intermediate router, wherein forwarding the network traffic using the backup route comprises: attaching at least one transport label to at least one packet of the network traffic, wherein the at least one transport label corresponds to a label-switched path between the intermediate router and the one other PE router of the at least two PE routers.
Example 8. An intermediate router comprising: a routing engine that configures the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN; wherein the routing engine installs, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and wherein the forwarding unit, in response to determining within the forwarding unit of the intermediate router that network traffic cannot reach the protected PE router, uses the backup route without requiring reprogramming the forwarding unit.
Example 9. The intermediate router of example 8, wherein the routing engine stores the primary route in a forwarding structure of the forwarding unit, wherein the forwarding structure comprises: the primary route, wherein the primary route defines a forwarding action to forward network traffic to the protected PE router, and a reference to a context table that includes the backup route.
Example 10. The intermediate router of example 9, wherein the routing engine generates the context table for the protected PE router, wherein the backup route in the context table defines a forwarding action to swap a first service label of a network packet with a second service label, wherein the first service label corresponds to a particular Ethernet Segment Identifier and is advertised by the protected PE router, and wherein the second service corresponds to the particular Ethernet Segment Identifier and is advertised by the one other PE router of the at least two PE routers.
Example 11. The intermediate router of example 8, 9 or 10, wherein the routing engine configures, in the forwarding unit of the intermediate router, a primary next hop for the primary route and a backup next hop for backup route, wherein the primary next hop is configured to forward network traffic using the primary route prior to determining that network traffic cannot reach the protected PE router from the intermediate router, wherein the backup next hop is configured to forward network traffic using the backup route in response to determining that network traffic cannot reach the protected PE router from the intermediate router; wherein the forwarding unit forwards, to the protected PE router and prior to determining that network traffic cannot reach the protected PE router from the intermediate router, network traffic using the primary route; and wherein the forwarding unit, in response to determining that network traffic cannot reach the protected PE router from the intermediate router, forwards to PE router other than the protected PE router that is included in the same Ethernet Segment, network traffic using the backup route.
Example 12. The intermediate router of any of examples 8 to 11, wherein the intermediate router is not directly coupled by a physical communication link to a customer-edge router in a customer network, and wherein the intermediate router is directly coupled by a physical communication link to the protected PE router.
Example 13. The intermediate router of any of examples 8 to 12, wherein the intermediate router is not directly coupled by a physical communication link to a customer-edge router in a customer network, and wherein the intermediate router is directly coupled by a physical communication link to the protected PE router.
Example 14. The intermediate router of any of examples 8 to 13, wherein the one other PE router of the at least two PE routers is more than one hop away from the intermediate router, wherein the forwarding unit attaches at least one transport label to at least one packet of the network traffic, wherein the at least one transport label corresponds to a label-switched path between the intermediate router and the one other PE router of the at least two PE routers.
Example 15. A computer-readable medium comprising instructions for causing at least one programmable processor of an intermediate router to: configure the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN; install, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and in response to determining within the forwarding unit of the intermediate router that network traffic cannot reach the protected PE router, forward network traffic using the backup route without requiring reprogramming the forwarding unit.
Example 16. The computer-readable medium of example 15 comprising instructions for causing the at least one programmable processor of the intermediate router to: store, by the intermediate router, the primary route in a forwarding structure of the forwarding unit, wherein the forwarding structure comprises: the primary route, wherein the primary route defines a forwarding action to forward network traffic to the protected PE router, and a reference to a context table that includes the backup route.
Example 17. The computer-readable medium of claim 16 comprising instructions for causing the at least one programmable processor of the intermediate router to: generate the context table for the protected PE router, wherein the backup route in the context table defines a forwarding action to swap a first service label of a network packet with a second service label, wherein the first service label corresponds to a particular Ethernet Segment Identifier and is advertised by the protected PE router, and wherein the second service corresponds to the particular Ethernet Segment Identifier and is advertised by the one other PE router of the at least two PE routers.
Example 18. The computer-readable medium of example 15, 16 or 17, comprising instructions for causing the at least one programmable processor of the intermediate router to: configure, in the forwarding unit of the intermediate router, a primary next hop for the primary route and a backup next hop for backup route, wherein the primary next hop is configured to forward network traffic using the primary route prior to determining that network traffic cannot reach the protected PE router from the intermediate router, wherein the backup next hop is configured to forward network traffic using the backup route in response to determining that network traffic cannot reach the protected PE router from the intermediate router; forward, to the protected PE router, prior to determining that network traffic cannot reach the protected PE router from the intermediate router, network traffic using the primary route; and in response to determining that network traffic cannot reach the protected PE router from the intermediate router, forward, to PE router other than the protected PE router that is included in the same Ethernet Segment, network traffic using the backup route.
Example 19. The computer-readable medium of any of examples 15 to 18, wherein the intermediate router is not directly coupled by a physical communication link to a customer-edge router in a customer network, and wherein the intermediate router is directly coupled by a physical communication link to the protected PE router.
Example 20. The computer-readable medium of any of examples 15 to 19, wherein the intermediate router operating in active-active mode does not perform MAC learning.
Moreover, any of the specific features set forth in any of the examples described above may be combined into beneficial examples of the described techniques. That is, any of the specific features are generally applicable to all examples. Various examples have been described. These and other examples are within the scope of the following claims.

## Claims

1. A method comprising:
configuring an intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN;
installing, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and
in response to determining within the forwarding unit of the intermediate router that network traffic cannot reach the protected PE router, forwarding network traffic using the backup route without requiring reprogramming the forwarding unit.

2. The method of claim 1, further comprising:
storing, by the intermediate router, the primary route in a forwarding structure of the forwarding unit, wherein the forwarding structure comprises:
the primary route, wherein the primary route defines a forwarding action to forward network traffic to the protected PE router, and
a reference to a context table that includes the backup route.

3. The method of any of claims 1-2, further comprising:
generating the context table for the protected PE router,
wherein the backup route in the context table defines a forwarding action to swap a first service label of a network packet with a second service label,
wherein the first service label corresponds to a particular Ethernet Segment Identifier and is advertised by the protected PE router, and
wherein the second service corresponds to the particular Ethernet Segment Identifier and is advertised by the one other PE router of the at least two PE routers.

4. The method of any of claims 1-3, wherein installing the primary route and the backup route comprises:
configuring, by the provider edge and in the forwarding unit of the intermediate router, a primary next hop for the primary route and a backup next hop for backup route, wherein the primary next hop is configured to forward network traffic using the primary route prior to determining that network traffic cannot reach the protected PE router from the intermediate router, wherein the backup next hop is configured to forward network traffic using the backup route in response to determining that network traffic cannot reach the protected PE router from the intermediate router;
forwarding, by the intermediate router and to the protected PE router, prior to determining that network traffic cannot reach the protected PE router from the intermediate router, network traffic using the primary route; and
in response to determining that network traffic cannot reach the protected PE router from the intermediate router, forwarding, by the intermediate router and to PE router other than the protected PE router that is included in the same Ethernet Segment, network traffic using the backup route.

5. The method of any of claims 1-4,
wherein the intermediate router is not directly coupled by a physical communication link to a customer-edge router in a customer network, and
wherein the intermediate router is directly coupled by a physical communication link to the protected PE router.

6. The method of any of claims 1-5, wherein the intermediate router operating in active-active mode does not perform MAC learning.

7. The method of any of claims 1-6, wherein the one other PE router of the at least two PE routers is more than one hop away from the intermediate router, wherein forwarding the network traffic using the backup route comprises:
attaching at least one transport label to at least one packet of the network traffic, wherein the at least one transport label corresponds to a label-switched path between the intermediate router and the one other PE router of the at least two PE routers.

8. An intermediate router comprising:
a routing engine that configures the intermediate router, which is positioned within an a service provider network between a remote provide edge router and at least two provider edge (PE) routers operating in active-active mode in an Ethernet Virtual Private Network (EVPN), to operate in a passive mode in which the intermediate router detects Ethernet Auto-Discovery (AD) routes advertised by the two provider edge (PE) routers to the remote PE router of the EVPN without performing layer two (L2) address learning for the EVPN;
wherein the routing engine installs, in a forwarding unit of the intermediate router and responsive to detecting the Ethernet AD routes, a primary route from the intermediate router to a protected router of the at least two PE routers and a backup route from the intermediate router to the one other PE router of the at least two PE routers, wherein the primary route and the backup route include respective EVPN labels from the detected Ethernet AD routes; and
wherein the forwarding unit, in response to determining within the forwarding unit of the intermediate router that network traffic cannot reach the protected PE router, uses the backup route without requiring reprogramming the forwarding unit.

9. The intermediate router of claim 8,
wherein the routing engine stores the primary route in a forwarding structure of the forwarding unit, wherein the forwarding structure comprises:
the primary route, wherein the primary route defines a forwarding action to forward network traffic to the protected PE router, and
a reference to a context table that includes the backup route.

10. The intermediate router of any of claims 8-9,
wherein the routing engine generates the context table for the protected PE router,
wherein the backup route in the context table defines a forwarding action to swap a first service label of a network packet with a second service label,
wherein the first service label corresponds to a particular Ethernet Segment Identifier and is advertised by the protected PE router, and
wherein the second service corresponds to the particular Ethernet Segment Identifier and is advertised by the one other PE router of the at least two PE routers.

11. The intermediate router of any of claims 8-10,
wherein the routing engine configures, in the forwarding unit of the intermediate router, a primary next hop for the primary route and a backup next hop for backup route, wherein the primary next hop is configured to forward network traffic using the primary route prior to determining that network traffic cannot reach the protected PE router from the intermediate router, wherein the backup next hop is configured to forward network traffic using the backup route in response to determining that network traffic cannot reach the protected PE router from the intermediate router;
wherein the forwarding unit forwards, to the protected PE router and prior to determining that network traffic cannot reach the protected PE router from the intermediate router, network traffic using the primary route; and
wherein the forwarding unit, in response to determining that network traffic cannot reach the protected PE router from the intermediate router, forwards to PE router other than the protected PE router that is included in the same Ethernet Segment, network traffic using the backup route.

12. The intermediate router of any of claims 8-11,
wherein the intermediate router is not directly coupled by a physical communication link to a customer-edge router in a customer network, and
wherein the intermediate router is directly coupled by a physical communication link to the protected PE router.

13. The intermediate router of any of claims 8-12,
wherein the intermediate router is not directly coupled by a physical communication link to a customer-edge router in a customer network, and
wherein the intermediate router is directly coupled by a physical communication link to the protected PE router.

14. The intermediate router of any of claims 8-13,
wherein the one other PE router of the at least two PE routers is more than one hop away from the intermediate router,
wherein the forwarding unit attaches at least one transport label to at least one packet of the network traffic, wherein the at least one transport label corresponds to a label-switched path between the intermediate router and the one other PE router of the at least two PE routers.

15. A computer-readable medium comprising instructions for causing at least one programmable processor of an intermediate router to become configured to perform the method recited by any of claims 1-7 or to become configured as the router of any of claims 8-14.
